**Europäisches Patentamt**

**European Patent Office**

**Office européen des brevets**

(19)

(11) Veröffentlichungsnummer: **0 090 947**
**B1**

(12) **EUROPÄISCHE PATENTSCHRIFT**

(45) Veröffentlichungstag der Patentschrift:
27.08.86

(21) Anmeldenummer: 83101944.3

(22) Anmeldetag: 28.02.83

(51) Int. Cl.⁴: **B 60 R  13/02**, B 60 R  13/06

(54)  Kantenschutz- und Dichtungsprofil.

(30) Priorität: 11.03.82 DE 3208804
             24.03.82 DE 8208275 U

(43) Veröffentlichungstag der Anmeldung:
   12.10.83 Patentblatt 83/41

(45) Bekanntmachung des Hinweises auf die Patenterteilung:
   27.08.86 Patentblatt 86/35

(84) Benannte Vertragsstaaten:
   DE FR GB IT SE

(56) Entgegenhaltungen:
   DE - A - 2 355 236
   DE - U - 8 208 275
   FR - A - 2 464 857
   FR - A - 2 509 825

(73) Patentinhaber: **Adam Opel Aktiengesellschaft,**
   **Bahnhofsplatz 1 Postfach 1560, D-6090 Rüsselsheim**
   **(DE)**

(72) Erfinder: **Müller, Helmut E., Ing. grad., Wiesenstrasse 62,**
   **D-6090 Rüsselsheim (DE)**
   Erfinder: **Storch, Eberhard A., Ing. grad.,**
   **Gartenstrasse 45, D-6082 Mörfelden-Walldorf (DE)**

(74) Vertreter: **Baumgarten, Jochem, Dipl.-Ing. et al, C/O**
   **Adam Opel Aktiengesellschaft**
   **Bahnhofsplatz 1 Postfach 1560, D-6090 Rüsselsheim**
   **(DE)**

**Beschreibung**

Die Erfindung betrifft ein Kantenschutz- und Dichtungsprofil, wie es beispielsweise im Fenster- und/oder Türrahmen von Kraftfahrzeugen angewendet wird, um einerseits Verbindungsflansche der Karosserie abzudecken und gleichzeitig Fenster bzw. Türen beim Schliessen zuverlässig gegen die Karosserie abzudichten.

Ein aus der DE-A-2 355 236 bekanntes derartiges Profil besitzt zwei jeweils im Querschnitt etwa U-förmige Halterungsteile, die durch drei Schenkel gebildet sind, und einen hieran anschliessenden lippen- und/oder hohlwulstförmigen Dichtungsteil aus weichem Kunststoff oder Gummi. Die Halterungsteile bilden entgegengesetzt gerichtete Aufnahmen für entsprechende Karosserieblechflansche einer Türinnenwand im Bereich des Fensterführungsschlitzes und bestehen aus Federstahl. Sie sind für die Anordnung an sichtbaren Stellen im Fahrzeug, insbesondere zur Abdeckung von in die gleiche Richtung weisenden Karosserieblechflansche, ungeeignet.

Aus der FR-A-2 509 825 ist auch ein Profil bekannt, das aus einem hohlwulstförmigen Dichtungsteil und einem U-förmigen, eine verstärkende Metalleinlage aufweisenden Halterungsteil besteht.

Aufgabe der Erfindung ist es, ein Kantenschutz- und Dichtungsprofil zu schaffen, das sichtzugänglich Karosserieflansche von Karosserieöffnungen im Fahrzeug zuverlässig abdeckt und die Öffnungen beim Schliessen von Fenstern oder Türen einwandfrei abdichtet und zusätzlich ein weiteres angrenzendes Verkleidungsteil, wie etwa eine Dachinnenverkleidung (Himmel), haltert.

Erfindungsgemäss wird diese Aufabe mit einem Kantenschutz- und Dichtungsprofil der eingangs erläuterten Art dadurch gelöst, dass ein gemeinsames in einer Ebene liegendes Joch die Schenkel verbindet und dass eines der Halterungsteile mindestens einen Karosserieflansch des Fahrzeuges und das andere mindestens ein Innenverkleidungteil des Fahrzeuges haltert. Durch diese Ausbildung ergeben sich zwei Halterungsteile mit gleichgerichteten U-Profilen, so dass ein Halterungsteil für die Aufnahme des Randes eines Karosserieverkleidungsteils benutzbar ist. Vorteilhafte Aus-und Weiterbildungen der Erfindung sind in den Unteransprüchen behandelt und in einem Ausführungsbeispiel dargestellt und anschliessend näher erläutert.

Es zeigen:

Fig. 1 ein Kantenschutz- und Dichtungsprofil und

Fig. 2 das Kantenschutz- und Dichtungsprofil im Einbauzustand jeweils in perspektivischer Darstellung.

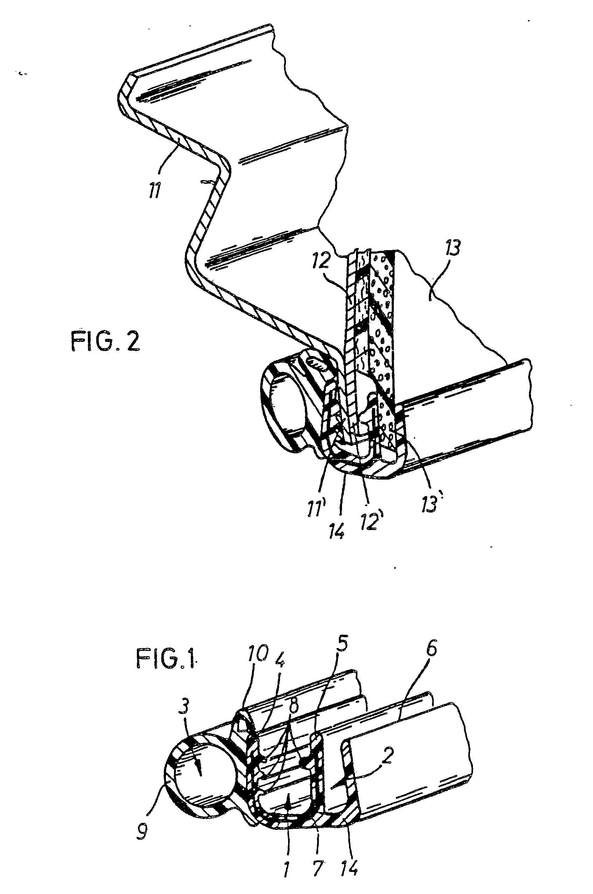

Der Profilstrang besteht aus den beiden im Querschnitt etwa U-förmigen Halterungsteilen 1 und 2 aus einem harten Kunststoff sowie dem Dichtungsteil 3, aus weichem Neoprene-Blähgummi. Die Halterungsteile sind mit dem Dichtungsteil in bekannter Weise verklebt oder aneinander vulkanisiert. Das Halterungsteil 1 mit den Schenkeln 4, 5 bildet zugleich mit seinem Schenkel 5 einen Schenkel des zweiten Halterungsteiles 2, dessen weiterer äusserer Schenkel 6 unter einem Winkel von etwa 35° nach innen geneigt ist. Die Schenkel 4, 5, 6 sind durch ein gemeinsames in einer Ebene liegendes Joch 14 miteinander verbunden, dessen Aussenfläche gewölbt ist. Dadurch entsteht eine gewisse Vorspannung, mit der ein aufzunehmendes Bauteil (Fig. 2) gehalten wird. Das Halterungsteil 1 ist durch ein metallisches Gerüstband 7 armiert und seine Schenkel 4, 5 besitzen einwärts gerichtete Halterippen 8. Zwei Hohlwülste 9 und 10 bilden das Dichtungsteil, wobei – wie aus Fig. 2 hervorgeht – der kleinere Hohlwulst sich bei Montage abdichtend an eine Karosseriewand, im vorliegenden Fall die Aussenschale 11 eines Dachlängsträgers anlegt, nachdem das Halterungsteil 1 auf die Schweissflansche 11' und 12' dieses aus Aussenschale 11 und Innenschale 12 gebildeten Längsträgers aufgesteckt worden ist. Mit 13 ist ein aus zwei Schichten aufgebauter vorgefertigter Dachhimmel bezeichnet, der mit seinem Rand 13' im Halterungsteil 2 gehalten ist. Auf diese Weise dient der Profilstrang als Abdichtung für die Türöffnung sowie als Kantenschutz für die Schweissflansche der Karosseriekonstruktion und zugleich als Halterung und Kantenabdeckung für den Formhimmel.

**Patentansprüche**

1. Kantenschutz- und Dichtungsprofil für Fenster- und/oder Türrahmen von Fahrzeugen, mit zwei jeweils im Querschnitt etwa U-förmigen Halterungsteilen und einem hieran anschliessenden lippen- und/oder hohlwulstförmigen Dichtungsteil aus weichem Kunststoff oder Gummi, wobei die U-Profile der Halterungsteile (1, 2) durch drei Schenkel (4, 5, 6) gebildet sind, dadurch gekennzeichnet, dass ein gemeinsames in einer Ebene liegendes Joch (14) die Schenkel (4, 5, 6) verbindet und dass eines der Halterungsteile mindestens einen Karosserieflansch (11',12') des Fahrzeuges und das andere mindestens ein Innenverkleidungsteil (13') des Fahrzeuges haltert.

2. Kantenschutz- und Dichtungsprofil nach Anspruch 1, dadurch gekennzeichnet, dass die Halterungsteile (1, 2), wie an sich bekannt, aus einem harten Kunststoff geformt sind und dass mindestens ein Halterungsteil in an sich bekannter Weise durch eine flexible Metalleinlage (7) armiert und mit schräg nach innen gerichteten Halterippen (8) an seinen Schenkeln (4, 5) versehen ist.

3. Kantenschutz- und Dichtungsprofil nach Anspruch 2, dadurch gekennzeichnet, dass nur das an das Dichtungsteil (3) anschliessende erste Halterungsteil (1) eine verstärkende Metalleinlage (7) aufweist.

4. Kantenschutz- und Dichtungsprofil nach den Anspruchen 1 bis 3, dadurch gekennzeichnet, dass der äussere freie Schenkel (6) des zweiten Halterungsteiles (2) kürzer als dessen anderer, einen gemeinsamen Schenkel mit dem ersten Halterungsteil (1) bildender Schenkel (5) ist.

5. Kantenschutz- und Dichtungsprofil nach Anspruch 4, dadurch gekennzeichnet, dass der äussere freie Schenkel (6) des zweiten Halterungsteiles (2) unter einem spitzen Winkel einwärts gerichtet ist.

6. Kantenschutz- und Dichtungsprofil nach Anspruch 5, dadurch gekennzeichnet, dass der freie Schenkel (6) mit dem Joch (14) des U-förmigen Profilquerschnitts einen Winkel von etwa 35° bildet.

7. Kantenschutz- und Dichtungsprofil nach den Ansprüchen 1 bis 6, dadurch gekennzeichnet, dass das gemeinsame Joch (14) eine gewölbte Aussenfläche aufweist.

8. Kantenschutz- und Dichtungsprofil nach Anspruch 1 und einem oder mehreren der übrigen Ansprüche, dadurch gekennzeichnet, dass das Dichtungsteil (3) an den dem zweiten Halterungsteil (2) abgekehrten freien Schenkel (4) des ersten Halterungsteiles (1) angeformt ist und aus Weichgummi, insbesondere Neoprene-Blähgummi besteht.

9. Kantenschutz- und Dichtungsprofil nach Anspruch 8, dadurch gekennzeichnet, dass das Dichtungsteil (3) in an sich bekannter Weise aus einem an das Ende des Schenkels (4) anschliessenden Hohlwulst (10) und einem weiteren etwa rechtwinklig aus der Schenkelebene auskragenden schlauchförmigen Hohlwulst (9) gebildet ist.

10. Anordnung eines Kantenschutz- und Dichtungsprofils nach den Ansprüchen 1 bis 9 im Türrahmen eines Personenkraftfahrzeuges in seinem an das Fahrzeugdach angrenzenden Bereich, wobei das erste Halterungsteil (1) auf die abwärts gerichtete Schweissflansche (11', 12') des Dachlängsträgers (11, 12) aufsteckbar ist und eine vorgefertigte Dachinnenverkleidung (13) (Himmel) mit ihrem Rand (13') von dem zweiten Halterungsteil (2) aufnehmbar und abdeckbar ist.

**Claims**

1. Edge protecting and sealing profile for window and/or door frames of vehicles, with two supporting portions each of approximately U-shaped cross-section, and adjoining same a lip-shaped and/or hollow bead-shaped sealing portion made of soft plastic or rubber, the U-profiles of the supporting portions (1, 2) being formed by three arms (4, 5, 6), characterised in that a common yoke (14) lying in one plane connects the arms (4, 5, 6), and one of the supporting portions supports at least one body flange (11', 12') of the vehicle, and the other supports at least one lining portion (13') of the vehicle.

2. Edge protecting and sealing profile according to claim 1, characterised in that the supporting portions (1, 2), as is known in the art, are made of a hard plastic, and at least one supporting portion is reinforced, in a manner known in the art, with a flexible metal insert (7) and provided with obliquely inwardly extending retaining ribs (8) on its arms (4, 5).

3. Edge protecting and sealing profile according to claim 2, characterised in that only the first supporting portion (1) adjoining the sealing portion (3) comprises a reinforcing metal insert (7).

4. Edge protecting and sealing profile according to claims 1 to 3, characterised in that the free outer arm (6) of the second supporting portion (2) is shorter than the other arm (5) thereof, which forms a common arm with the first supporting portion (1).

5. Edge protecting and sealing profile according to claim 4, characterised in that the free outer arm (6) of the second supporting portion (2) is directed inwardly at an acute angle.

6. Edge protecting and sealing profile according to claim 5, characterised in that the free arm (6) forms an angle of approximately 35° with the yoke (14) of the U-section of the profile.

7. Edge protecting and sealing profile according to claims 1 to 6, characterised in that the common yoke (14) comprises a convex outer surface.

8. Edge protecting and sealing profile according to claim 1 and one or more of the remaining claims, characterised in that the sealing portion (3) is formed integrally on the free arm (4) of the first supporting portion (1) remote from the second supporting portion (2), and is made of soft rubber, in particular expanded neoprene rubber.

9. Edge protecting and sealing profile according to claim 8, characterised in that the sealing portion (3), in a manner known in the art, is composed of a hollow bead (10) adjoining the end of the arm (4), and an additional tubular hollow bead (9) projecting approximately at right angles out of the plane of the arm.

10. Arrangement of an edge protecting and sealing profile according to claims 1 to 9 in the door frame of a passenger car, in the region thereof adjoining the vehicle roof, wherein the first supporting portion (1) can be fitted over the downwardly directed welded flanges (11', 12') of the roof longitudinal member (11, 12), and the edge (13') of a prefabricated roof lining (13) can be held and covered by the second supporting portion (2).

**Revendications**

1. Profilé d'étanchéité et de protection d'arête, pour encadrements de fenêtres et/ou de portières de véhicules automobiles, comportant deux parties de fixation ayant chacune une section droite sensiblement en forme de U, et une partie d'étanchéité, enforme de lèvre et/ou de bourrelet creux, qui se raccorde aux parties de fixation et qui est faite de caoutchouc ou de matière plastique souple, les profilés en forme de U des parties de fixation (1, 2) étant formés par trois ailes (4, 5, 6), caractérisé en ce qu'une âme commune (14) située dans un plan relie les ailes (4, 5, 6) et en ce que l'une des parties de fixation maintient au moins un bord de tôle (11', 12') de la carrosserie du véhicule et l'autre partie de fixation maintient au moins une pièce d'habillage intérieur (13') du véhicule.

2. Profilé d'étanchéité et de protection d'arête selon la revendication 1, caractérisé en ce que les parties de fixation (1, 2) sont formées, de manière connue en soi, en une matière plastique dure, et en ce qu'au moins une partie de fixation est munie, de manière connue en soi, d'une armature métallique flexible (7) et est munie, sur ses ailes (4, 5), de nervures de retenue (8) dirigées obliquement vers l'intérieur.

3. Profilé d'étanchéité et de protection d'arête selon la revendication 2, caractérisé en ce que seule la première partie de fixation (1) adjacente à la partie d'étanchéité (3) présente une armature métallique de renforcement (7).

4. Profilé d'étanchéité et de protection d'arête selon les revendications 1 à 3, caractérisé en ce que l'aile extérieure libre (6) de la deuxième partie de fixation (2) est plus courte que son autre aile (5) formant une aile commune avec la première partie de fixation (1).

5. Profilé d'étanchéité et de protection d'arête selon la revendication 4, caractérisé en ce que l'aile extérieure libre (6) de la deuxième partie de fixation (2) est dirigée vers l'intérieur, sous un angle aigu.

6. Profilé d'étanchéité et de protection d'arête selon la revendication 5, caractérisé en ce que l'aile libre (6) forme, avec l'âme (14) de la section de profil en U, un angle de l'ordre de 35°.

7. Profilé d'étanchéité et de protection d'arête selon les revendications 1 à 6, caractérisé en ce que l'âme commune (14) présente une surface extérieure bombée.

8. Profilé d'étanchéité et de protection d'arête selon la revendication 1 et une ou plusieurs des autres revendications, caractérisé en ce que la partie d'étanchéité (3) est formée sur celle (4) des ailes de la première partie de fixation (1) qui est libre et éloignée de la deuxième partie de fixation (2), et en ce que cette partie d'étanchéité est en caoutchouc souple, notamment en caoutchouc néoprène expansé.

9. Profilé d'étanchéité et de protection d'arête selon la revendication 8, caractérisé en ce que la partie d'étanchéité (3) est constituée, de manière connue en soi, par un bourrelet creux (10) se raccordant à l'extrémité de l'aile (4) et par un autre bourrelet creux (9), en forme de tuyau, formant un relief saillant à angle droit hors du plan de ladite aile.

10. Agencement d'un profilé d'étanchéité et de protection d'arête selon les revendications 1 à 9 dans l'encadrement d'une portière d'un véhicule automobile de tourisme, dans la région bordant le pavillon de ce véhicule, la première partie de fixation (1) étant apte à être emboîtée sur les bords soudés (11', 12'), dirigés vers l'extérieur, du longeron (11, 12) de pavillon et le bord 13' d'un habillage intérieur de pavillon préfabriqué (13) pouvant être reçu et recouvert par la deuxième partie de fixation (2).

FIG. 2

FIG. 1